# EUROPEAN PATENT SPECIFICATION

(11) **EP 3 479 997 B1**
(45) Date of publication and mention of the grant of the patent: **03.11.2021**
(21) Application number: 18189909.7
(22) Date of filing: 21.08.2018
(51) Int. Cl.: B29C 57/00

(54) **HYGIENIC JUNCTION PIPE MADE OF PLASTIC MATERIAL**
HYGIENISCHES ANSCHLUSSROHR AUS KUNSTSTOFF
TUYAU DE JONCTION HYGIÉNIQUE CONSTITUÉ DE MATIÈRE PLASTIQUE

(30) Priority: 06.11.2017 IT 201700125831
(43) Date of publication of application: 08.05.2019
(73) Proprietor: A.T.P. - Societa' Per Azioni O A.T.P. - S.P.A., 41122 Modena (IT)
(72) Inventor: SIMONCINI, Lorenzo, 41122 Modena (IT)
(74) Representative: Long, Giorgio

(56) References cited:
- US-A- 4 152 817
- US-B1- 6 485 666

## Description

The present invention relates to a junction pipe of a piping or apparatuses or parts thereof and to a process for manufacturing them.

Steel pipes are commonly used in the industrial field to connect pipings and/or apparatuses or various devices of a same apparatus. Typical examples are those of machines in the food (especially for beverages) and pharmaceutical industries. In some cases, the junction pipes must in fact withstand high pressures, such as in the case of apparatuses and pipings in distribution lines in which pressurized fluids flow, and must be capable of resisting even possible "water hammers" that may occur during the steps of opening/closing a valve. The junction pipes may be watertight fixed to the ends which they must connect by means of known "clamp systems".

Frequently, the parts to be connected are positioned so as to require a non-linear junction pipe, for example, an elbow junction pipe.

An issue that appears with such junction pipes is that even very small machining or arrangement inaccuracies of the pipings or of the devices which must be connected make it extremely difficult, if not impossible, to make the connection with the junction pipe, due to the relative stiffness of the steel pipe. To solve this drawback, junction pipes with the central portion made of a plastic material, adapted to withstand the required operating pressures, on which the steel terminal junction portions have been watertight fitted, have been proposed. The material used in these junction pipes is PTFE, which ensures a good resistance to pressure, a sufficient flexibility of the product and excellent fluidity and hygiene features. Thereby, the machining and assembly tolerances of the parts which must be connected by the junction pipe may be greater, by virtue of the fact that such pipe may be slightly flexed so as to adapt thereto.

However, an issue which still appears with such junction pipes is the fact that, despite the good seal between PTFE body and steel ends, the junction point between such portions is a receptacle for dirt or residues of the liquid being processed. Furthermore, such junction pipes have a high cost, both for the fact that they still use steel parts, and for the processing necessary to obtain them. Another prior art technology is disclosed in US6485666.

In this context, the technical task underlying the present invention is to provide junction pipes which overcome the drawbacks of the background art and which have a low cost.

The illustrated technical task and the objects specified are substantially achieved by a process for manufacturing junction pipes made of plastic material and by the junction pipes thus obtained, comprising the technical features set out in one or more of the appended claims, the definitions of which form an integral part of the present description.

Further features and advantages of the present invention will become more apparent from the indicative, and therefore non-limiting, description of a preferred but not exclusive embodiment of the invention, as shown in the accompanying drawings in which:
- Figure 1 shows a perspective view of a junction pipe in accordance with the invention;
- Figure 2 shows a perspective view of a punching apparatus employable in the process of the invention;
- Figure 3 shows a sectional view of a junction pipe in accordance with the invention;

- Figure 4 shows a sectional view of a punching device in accordance with the invention in the machining step;
- Figure 5 shows a partial perspective view of the punching device of the invention;
- Figure 6 shows a side sectional view of a punch of the punching device of the invention according to a different embodiment;
- Figure 7 shows a sectional view of the matrix of the punching device of the invention;
- Figure 8 shows a sectional view of a different embodiment of the junction pipe of the invention.

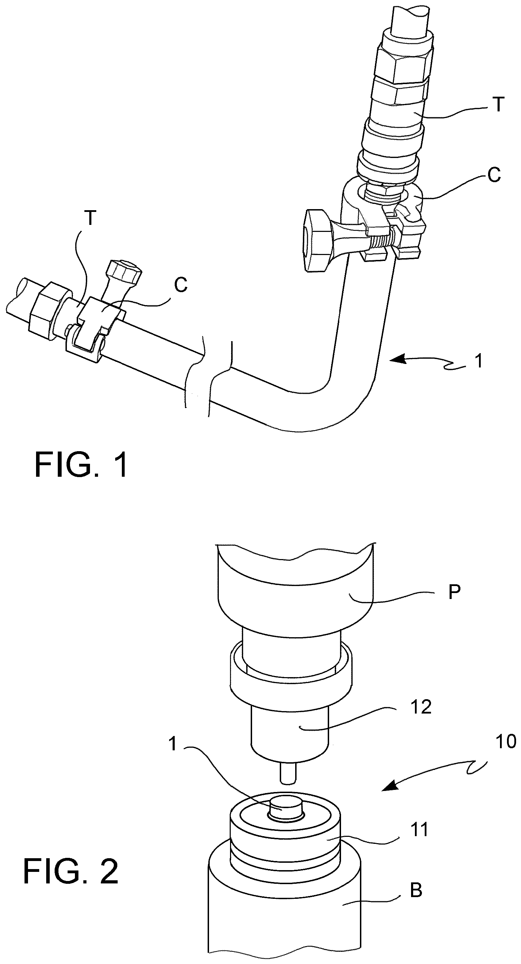

With reference to the Figures, the junction pipe in accordance with the invention, indicated with numeral 1, is entirely made of plastic material and comprises, at at least one end 2a, 2b, a connecting portion 3 to a piping T (Figure 1), a device and/or part of a device of a fluid processing apparatus or plant.

The connecting portion 3 is shaped so as to be capable of being coupled to said piping T or device by means of a "clamp system" C of the conventional type. In particular, the connecting portion 3 has a diameter greater than the external diameter of the junction pipe 1 and, thereby, it forms a shoulder 4 therewith, having a flared profile towards the end of the junction pipe 1.

The connecting portion 3 comprises an annular shape terminal surface 5 lying on a plane perpendicular to a main axis X of the junction pipe 1. The terminal surface 5 comprises an annular groove 6 constituting a seat for a sealing ring.

In certain embodiments, the external surface of the junction pipe 1, in a position proximal to the connecting portion 3, comprises a knurl 7.

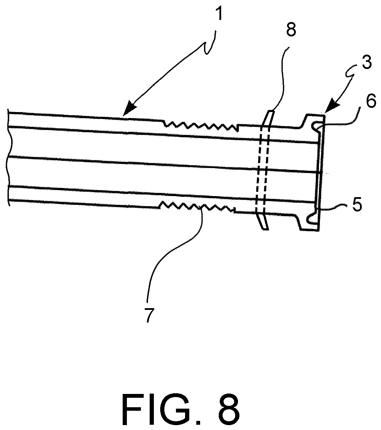

In a different embodiment, shown in Figure 8, the junction pipe 1 comprises a reinforcing ring 8, for example, a ring made of rigid plastic material (for example, PEEK) or metal, shaped so as to adhere to the shoulder 4. In preferred embodiments, the reinforcing ring 8 is fixed and embedded in the shoulder surface 4.

The plastic material with which the junction pipe 1 is made is preferably selected from PTFE (polytetrafluoroethylene), TFM (modified polytetrafluoroethylene), PFA (perfluoroalkoxy), PE (polyethylene), PP (polypropylene), POM (polyoxymethylene), nylon and PEEK (polyether ether ketone). More preferably, the plastic material is PTFE or TFM, even more preferably TFM.

To obtain an adequate resistance to the internal pressure of the fluid, while keeping a certain flexibility of the junction pipe 1, the thickness of the pipe 1 walls, i.e., the difference between the external diameter and the internal diameter of the pipe 1, is less than 4 mm, depending on the uses for which the junction pipe 1 is intended.

The junction pipe 1 may have any shape or length. A linear junction pipe 1 may be produced, as a semi-finished pipe on which the connecting portion 3 will then be made, by means of known extrusion techniques. An elbow pipe (as that shown in the Figures) or generally a pipe with a curvilinear shape may be produced from the linear pipe, both before and after making the connecting portion or portions 3, by heating the portion of pipe to be curved and employing particular jigs and cores for the curvature thereof.

A process for manufacturing the junction pipe 1 as described above is a further object of the present invention. The Applicant has in fact found out that, to make a pipe from one of the materials listed above, and in particular a pipe in TFM, a particular process must be put in place, comprising the following steps in sequence:
a) providing a semi-finished pipe made of plastic material, preferably of a material selected from PTFE, TFM, PFA, PE, PP, POM, nylon and PEEK, more preferably in TFM, having a wall thickness preferably less than 4 mm;
b) providing a punching device 10 comprising a punch 12 and a matrix 11, wherein said punch 12 and said matrix 11, when in closing condition, reproduce in negative the shape of the connecting portion 3 of the junction pipe 1 to be manufactured;
c) anchoring the semi-finished pipe of step a) to the matrix 11, making an end portion 2a, 2b of semi-finished pipe, having a volume of plastic material equal to or up to 25% greater with respect to the solid volume of the connecting portion 3 of the junction pipe 1 to be made, emerge from the matrix 11;
d) optionally, arranging a reinforcing ring 8, made of plastic material or metal, on the end portion 2a, 2b of the semi-finished pipe anchored to the matrix 11;
e) heating said end portion 2a, 2b of semi-finished pipe up to a plastic material softening temperature;
f) closing said punch 12 on said matrix 11 so as to form said connecting portion 3;
g) keeping the punch 12 on the matrix 11 for a time sufficient to consolidate the shape of said connecting portion 3 of the junction pipe 1;
h) cooling the punching device 10 wherein said connecting portion 3 of the junction pipe 1 has been formed at a refrigerated temperature;
i) opening the punching device 10 and extracting the junction pipe 1 comprising a connecting portion 3 as defined above;
l) optionally, repeating steps a) - i) on the opposite end portion 2a, 2b of the junction pipe 1.

The step e) of heating the end portion 2a, 2b of the semi-finished pipe may be carried out by any means known at an industrial level, for example, a hot air dispenser. When the junction pipe 1 is in TFM, for example, the heating will have to bring the end portion 2a, 2b at such a temperature to make the material substantially transparent.

If the process also comprises the optional step d), the punching step f) may weld the reinforcing ring 8 to the shoulder 4 of the junction pipe 1 or embed it into the surface thereof, therefore forming a connecting portion 3 to the reinforcing ring 8 integral thereto.

The cooling steps g) and h) have the purpose of facilitating the extraction of the junction pipe 1 with the formed connecting portion 3, avoiding the deformation of the plastic material in case it was not sufficiently hardened. Step h) is preferably carried out by means of the immersion in a refrigerated fluid. Said refrigerated temperature is preferably a temperature of approximately 4°C.

The punching device 10 employed in the process of the invention comprises, as said, a punch 12 and a matrix 11.

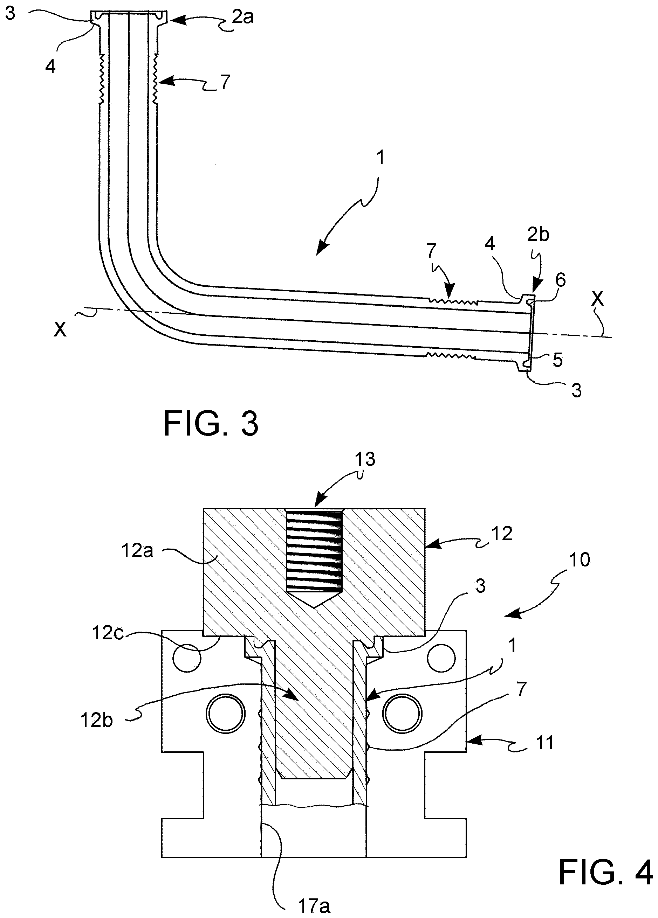

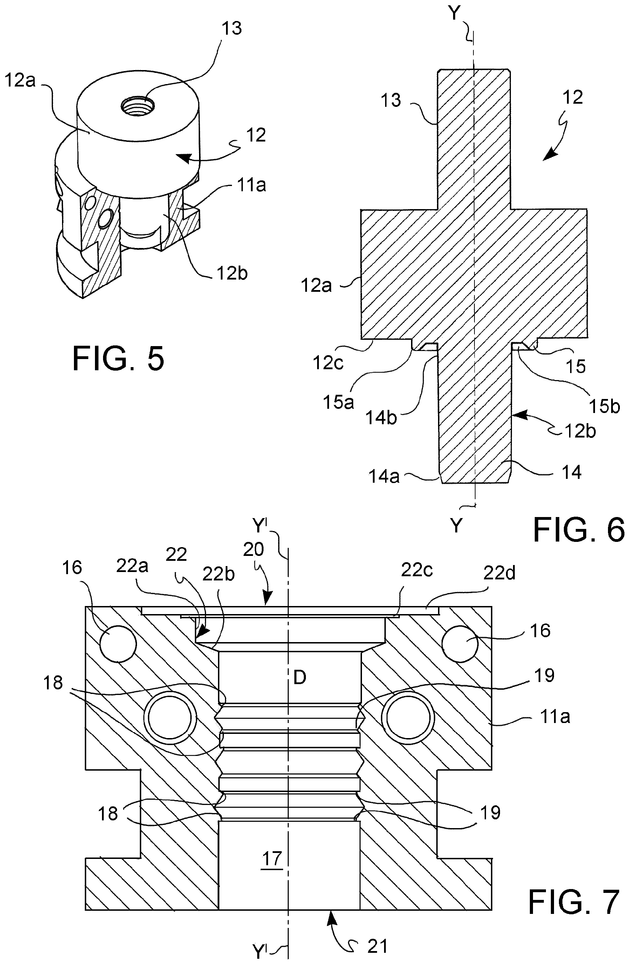

As shown in Figures 4 and 5, the punch 12 has, in section, a T-profile and comprises a centering portion 12a and a punching portion 12b, wherein both the centering portion 12a and the punching portion 12b develop along an axis Y and wherein the centering portion 12a is radially protruding with respect to the punching portion 12b, so as to form a shoulder 12c.

The centering portion 12a preferably has a cylindrical shape, although it may also have other shapes, for example, a polygonal shape. The centering portion 12a further comprises anchoring means 13 to a punching press P (Figure 2), which anchoring means 13, in the embodiment of Figures 4 and 5, comprise a thread internal to the body of the centering portion 12a. In a different embodiment, shown in Figure 6, the anchoring means 13 are made by means of a pin which may be inserted and fixed in a special seat of the press P.

The punching portion 12b comprises a truncated-conical element 14 and a punching profile 15.

The truncated-conical element 14 has a major diameter d substantially corresponding to or slightly less than the internal diameter of the junction pipe 1, so as to be inserted therein when the punch 12 is closing on the matrix 11. The term "major diameter d" means the diameter of the base of the truncated-cone forming the truncated-conical element 14.

To facilitate the introduction, the truncated-conical element 14 has a beveled distal end 14a.

The punching profile 15 is arranged on the shoulder 12c, in a position circumferentially adjacent to the proximal end 14b of the truncated-conical element 14. The punching profile 15 is shaped in negative with respect to the terminal surface 5 of the junction pipe 1 which it must form, thereby it has an impression comprising an annular relief 15a arranged externally, connecting to the proximal end 14b of the truncated-conical element 14 by means of an annular groove 15b.

The matrix 11 comprises a first 11a and a second semi-matrix 11b (in the Figures only one semi-matrix 11a is shown), which may be joined either by means of coupling pins 16 and corresponding holes or by means of a joint (not shown). The possibility of opening or closing the semi-matrix 11a, 11b allows to introduce and to remove the junction pipe 1.

The matrix 11 comprises a tubular cavity 17 developing along a longitudinal axis Y' and having a first opening 20. The tubular cavity 17 is configured so as to be coupled to the punch 12 making the respective axes Y, Y' coincide and making a mold for the coupling portion 3 of the junction pipe 1. To this end, the tubular cavity 17 has a diameter D greater than the diameter d of the truncated-conical element 14 of the punch 12 and substantially corresponding to the external diameter of the junction pipe 1. Thereby, when the punching device 10 is in a closing operating condition, the junction pipe 1 is pressed and firmly kept between the truncated-conical element 14 and the surface 17a of the tubular cavity 17.

The surface 17a of the tubular cavity 17 further comprises a plurality of circular reliefs 18 arranged in a contiguous position and separated by circular depressions 19, so as to make a sawtooth profile. Such circular reliefs 18 and such circular depressions 19 have the purpose of favoring the retention of the junction pipe 1 during the punching, avoiding the axial sliding thereof. In fact, being the material of the junction pipe 1 heated immediately before the punching, the circular reliefs 18 penetrate the material and therefore form the knurl 7 which is present in the junction pipe 1 of the invention.

The tubular cavity 17 is preferably a through cavity and has, therefore, a second opening 21 opposite to the first opening 20, so as to allow the junction pipe 1, which may have variable length and shape, to exit the matrix 11.

The matrix 11 comprises, at the first opening 20 of the tubular cavity 17, a punching seat 22. The punching seat 22 comprises a first cylindrical portion 22a, having a diameter greater than the diameter D of the tubular cavity 17 and substantially corresponding to the external diameter of the connecting portion 3 of the junction pipe 1 to be made. Between the first cylindrical portion 22a of the punching seat 22 and the surface 17a of the tubular cavity 17 an inclined shoulder 22b is therefore formed, the flaring thereof being complementary to the flaring of the shoulder 4 of the connecting portion 3 of the junction pipe 1.

The axial extension (along the axis Y') of the first cylindrical portion 22a and of the inclined shoulder 22b is approximately corresponding to the axial extension (along the axis X) of the connecting portion 3 and of the shoulder 4 of the junction pipe 1.

The punching seat 22 further comprises a second 22c and a third cylindrical portion 22d, arranged in a concentric relationship, externally with respect to the first cylindrical portion 22a.

The second and third cylindrical portion 22c, 22d have an axial extension (along the axis Y') which is less than that of the first cylindrical portion 22a.

The second cylindrical portion 22c has the function of accommodating any burrs of plastic material formed during the punching, in case the volume of punched material is slightly greater than that required. Such burrs may then be removed in a subsequent finishing step of the conventional type.

The third cylindrical portion 22d has a shape complementary to that of the centering portion 12a of the punch 12 or to a terminal part thereof and, therefore, has the function of allowing the correct centering of the punching device 10 during the closing operating step.

Even the matrix 11 comprises anchoring means (not shown) to a base B (Figure 2) of the press P.

From the foregoing, the advantages of the junction pipe 1 in accordance with the invention and of the process for the achievement thereof appear evident.

The junction pipe 1 is a plastic material monolith which associates the resistance to the internal pressure with a sufficient flexibility, allowing it to adapt to greater tolerances with respect to those required by steel junction pipes.

On the other hand, the fact that the junction pipe of the invention is in one piece not only reduces production costs, but avoids infiltrations of dirt or food residues at the junction points between the steel parts and the plastic parts of the known junction pipes.

The process of the invention has been specifically developed for manufacturing the junction pipe 1, since, to the knowledge of the inventors of the present patent application, no molding system for plastic material such as PTFE, adapted to produce a connecting portion 3 like that described herein, was available.

It is apparent that only some particular embodiments of the present invention have been described, to which those skilled in the art will be capable of making all those modifications required for the adaptation thereof to particular applications, without therefore departing from the scope of protection of the present invention, as defined in the appended claims.

## Claims

1. A process for manufacturing a junction pipe (1) entirely made of plastic material, the junction pipe being configured for a "clamp system" and comprising, at at least one end (2a, 2b) of said junction pipe (1), a connecting portion (3) to a piping (T), a device and/or part of a device of a fluid processing apparatus or plant, said process comprising the following steps in sequence:
a) providing a semi-finished pipe in plastic material;
b) providing a punching device (10) comprising a punch (12) and a matrix (11), wherein said punch (12) and said matrix (11), when in closing condition, reproduce in negative the shape of the connecting portion (3) of the junction pipe (1) to be manufactured, wherein:
- the punch (12) comprises a centering portion (12a) and a punching portion (12b), wherein both the centering portion (12a) and the punching portion (12b) develop along an axis (Y) and wherein the centering portion (12a) is radially protruding with respect to the punching portion (12b), so as to form a shoulder (12c), the punching portion (12b) comprising a truncated-conical element (14) and a punching profile (15), wherein the truncated-conical element (14) comprises a distal end (14a) and a proximal end (14b) and has a major diameter (d), substantially corresponding to, or slightly less than the internal diameter of the junction pipe (1), and wherein the distal end (14a) is preferably beveled, wherein the punching profile (15) is arranged on the shoulder (12c), in a position circumferentially adjacent to the proximal end (14b) of the truncated-conical element (14), the punching profile (15) comprising an impression comprising an annular relief (15a) connecting to the proximal end (14b) of the truncated-conical element (14) by means of an annular groove (15b),
- the matrix (11) comprises a tubular cavity (17) developing along a longitudinal axis (Y') and having a first opening (20), the tubular cavity (17) being configured so as to couple with the punch (12) making the respective axes (Y, Y') coincide and making a mold for the coupling portion (3) of the junction pipe (1), wherein the matrix (11) comprises, at the first opening (20) of the tubular cavity (17), a punching seat (22), wherein the tubular cavity (17) comprises a surface (17a) comprising a plurality of circular reliefs (18) arranged in a contiguous position and separated by circular depressions (19), so as to make a sawtooth profile,
- the punching seat (22) comprises a first cylindrical portion (22a), having a diameter substantially corresponding to the external diameter of the connecting portion (3) of the junction pipe (1) to be manufactured, an inclined shoulder (22b) being formed between said first cylindrical portion (22a) and said surface (17a) of the tubular cavity (17);
c) anchoring the semi-finished pipe of step a) to the matrix (11), making an end portion (2a, 2b) of semi-finished pipe, having a volume of plastic material equal to or up to 25% greater with respect to the solid volume of the connecting portion (3) of the junction pipe (1) to be manufactured, emerge from the matrix (11);
d) optionally, arranging a reinforcing ring (8), in plastic material or metal, on the end portion (2a, 2b) of the semi-finished pipe anchored to the matrix (11);
e) heating said end portion (2a, 2b) of semi-finished pipe up to a plastic material softening temperature;
f) closing said punch (12) on said matrix (11) so as to form said connecting portion (3);
g) keeping the punch (12) on the matrix (11) for a time sufficient to consolidate the shape of said connecting portion (3) of the junction pipe (1);
h) cooling the punching device (10), wherein said connecting portion (3) of the junction pipe (1) has been formed, at a refrigerated temperature;
i) opening the punching device (10) and extracting the junction pipe (1) comprising said connecting portion (3) ;
l) optionally, repeating steps a) - i) on the opposite end portion (2a, 2b) of the junction pipe (1).

2. The process according to claim 1, wherein the plastic material is selected from polytetrafluoroethylene, modified polytetrafluoroethylene, perfluoroalkoxy, polyethylene, polypropylene, polyoxymethylene, nylon and polyether ether ketone, preferably modified polytetrafluoroethylene, and wherein the semi-finished pipe has a wall thickness preferably of between 1.5 mm and 4 mm.

3. The process according to claim 1 or 2, wherein step g) and/or step h) are conducted for a time of approximately 5 minutes, and wherein said refrigerated temperature is preferably of approximately 4 °C.

4. A punching device (10) specifically adapted to the process of claims 1 to 3, wherein said punching device (10) comprises a punch (12) and a matrix (11), wherein said punch (12) and said matrix (11), when in closing condition, reproduce in negative the shape of the connecting portion (3) of the junction pipe (1) to be manufactured, wherein:
- the punch (12) comprises a centering portion (12a) and a punching portion (12b), wherein both the centering portion (12a) and the punching portion (12b) develop along an axis (Y) and wherein the centering portion (12a) is radially protruding with respect to the punching portion (12b), so as to form a shoulder (12c), the punching portion (12b) comprising a truncated-conical element (14) and a punching profile (15), wherein the truncated-conical element (14) comprises a distal end (14a) and a proximal end (14b) and has a major diameter (d), substantially corresponding to, or slightly less than the internal diameter of the junction pipe (1), and wherein the distal end (14a) is preferably beveled, wherein the punching profile (15) is arranged on the shoulder (12c), in a position circumferentially adjacent to the proximal end (14b) of the truncated-conical element (14), the punching profile (15) comprising an impression comprising an annular relief (15a) connecting to the proximal end (14b) of the truncated-conical element (14) by means of an annular groove (15b),
- the matrix (11) comprises a tubular cavity (17) developing along a longitudinal axis (Y') and having a first opening (20), the tubular cavity (17) being configured so as to couple with the punch (12) making the respective axes (Y, Y') coincide and making a mold for the coupling portion (3) of the junction pipe (1), wherein the matrix (11) comprises, at the first opening (20) of the tubular cavity (17), a punching seat (22), wherein the tubular cavity (17) comprises a surface (17a) comprising a plurality of circular reliefs (18) arranged in a contiguous position and separated by circular depressions (19), so as to make a sawtooth profile,
- the punching seat (22) comprises a first cylindrical portion (22a), having a diameter substantially corresponding to the external diameter of the connecting portion (3) of the junction pipe (1) to be manufactured, an inclined shoulder (22b) being formed between said first cylindrical portion (22a) and said surface (17a) of the tubular cavity (17).

5. The punching device (10) according to claim 4, wherein the matrix (11) comprises a first (11a) and a second semi-matrix (11b) which can be coupled by means of coupling means such as pins (16) or hinges.

6. The punching device (1) according to claim 4 or 5, wherein the tubular cavity (17) is a through cavity and has a second opening (21) opposite to said first opening (20).

7. The punching device (10) according to any one of claims 4 to 6, wherein the punching seat (22) further comprises a second (22c) and a third cylindrical portion (22d), arranged in a concentric relationship, externally with respect to the first cylindrical portion (22a), wherein the second cylindrical portion (22c) is configured so as to accommodate any burrs of plastic material formed during the punching, and wherein the third cylindrical portion (22d) has a shape complementary to that of the centering portion (12a) of the punch (12) or a terminal part thereof.

8. A junction pipe (1) configured for a "clamp system", **characterized in that** it is entirely made of monolithic plastic material without joints, it has an internal surface of even diameter and comprises, at at least one end (2a, 2b), a connecting portion (3) to a piping (T), a device and/or part of a device of a fluid processing apparatus or plant, wherein the connecting portion (3) has a greater diameter than the external diameter of the junction pipe (1) and forms therewith a shoulder (4) with a profile flared towards the end (2a, 2b) of the junction pipe (1).

9. The junction pipe (1) according to claim 8, wherein the connecting portion (3) comprises an annular shape terminal surface (5) lying on a plane perpendicular to a main axis (X) of the junction pipe (1), wherein said terminal surface (5) comprises an annular groove (6) constituting a seat for a sealing ring.

10. The junction pipe (1) according to any of claims 8 to 9, wherein the external surface of the junction pipe (1), in a position proximal to the connecting portion (3), comprises a knurl (7).

11. The junction pipe (1) according to any of claims 8 to 10, wherein the junction pipe (1) comprises a reinforcing ring (8), shaped so as to adhere to the shoulder (4).

12. The junction pipe (1) according to claim 11, wherein the reinforcing ring (8) is fixed and embedded in the shoulder surface (4).

13. The junction pipe (1) according to any of claims 8 to 12, wherein the plastic material is selected from polytetrafluoroethylene, modified polytetrafluoroethylene, perfluoroalkoxy, polyethylene, polypropylene, polyoxymethylene, nylon and polyether ether ketone, preferably modified polytetrafluoroethylene.

14. The junction pipe (1) according to any of claims 8 to 13, wherein the thickness of the pipe walls (1) is less than 4 mm.

## Patentansprüche

1. Verfahren zur Herstellung eines Anschlussrohrs (1), welches vollständig aus einem Kunststoffmaterial hergestellt ist, wobei das Anschlussrohr für ein "Klemmsystem" eingerichtet ist und an wenigstens einem Ende (2a, 2b) des Anschlussrohrs (1) einen Verbindungsabschnitt (3) zu einer Rohrleitung (T), einer Vorrichtung und/oder einem Teil einer Vorrichtung einer Fluidverarbeitungseinrichtung oder -anlage umfasst, wobei das Verfahren nacheinander die folgenden Schritte umfasst:
a) Bereitstellen eines halbfertigen Rohrs aus einem Kunststoffmaterial;
b) Bereitstellen einer Stanzvorrichtung (10), welche eine Stanze (12) und eine Matrix (11) umfasst, wobei die Stanze (12) und die Matrix (11), wenn sie sich in einem Schließzustand befinden, die Form des Verbindungsabschnitts (3) des herzustellenden Anschlussrohrs (1) im Negativ reproduzieren, wobei:
- die Stanze (12) einen Zentrierungsabschnitt (12a) und einen Stanzabschnitt (12b) umfasst, wobei sich sowohl der Zentrierungsabschnitt (12a) als auch der Stanzabschnitt (12b) entlang einer Achse (Y) erstrecken und wobei der Zentrierungsabschnitt (12a) in Bezug auf den Stanzabschnitt (12b) radial hervorsteht, um eine Schulter (12c) zu bilden, wobei der Stanzabschnitt (12b) ein kegelstumpfförmiges Element (14) und ein Stanzprofil (15) umfasst, wobei das kegelstumpfförmige Element (14) ein distales Ende (14a) sowie ein proximales Ende (14b) umfasst und einen Hauptdurchmesser (d) aufweist, welcher im Wesentlichen entsprechend zu dem oder geringfügig kleiner als der Innendurchmesser des Anschlussrohrs (1) ist, und wobei das distale Ende (14a) vorzugsweise abgeschrägt ist, wobei das Stanzprofil (15) in einer in Umfangsrichtung zu dem proximalen Ende (14b) des kegelstumpfförmigen Elements (14) benachbarten Position an der Schulter (12c) angeordnet ist, wobei das Stanzprofil (15) eine Prägung umfasst, welche eine ringförmige Aussparung (15a) umfasst, welche mittels einer ringförmigen Nut (15b) mit dem proximalen Ende (14b) des kegelstumpfförmigen Elements (14) verbunden ist,
- die Matrix (11) einen röhrenförmigen Hohlraum (17) umfasst, welcher sich entlang einer longitudinalen Achse (Y') erstreckt und eine erste Öffnung (20) aufweist, wobei der röhrenförmige Hohlraum (17) derart eingerichtet ist, dass er mit der Stanze (12) gekoppelt ist, so dass die jeweiligen Achsen (Y, Y') übereinstimmen und eine Form für den Kopplungsabschnitt (3) des Anschlussrohrs (1) ausbilden, wobei die Matrix (11) an der ersten Öffnung (20) des röhrenförmigen Hohlraums (17) einen Stanzsitz (22) umfasst, wobei der röhrenförmige Hohlraum (17) eine Fläche (17a) umfasst, welche eine Mehrzahl kreisförmiger Aussparungen (18) umfasst, welche in einer zusammenhängenden Position angeordnet sind und durch kreisförmige Einsenkungen (19) getrennt sind, um ein sägezahnförmiges Profil auszubilden,
- der Stanzsitz (22) einen ersten zylindrischen Abschnitt (22a) umfasst, welcher einen Durchmesser aufweist, welcher im Wesentlichen dem Außendurchmesser des Verbindungsabschnitts (3) des herzustellenden Anschlussrohrs (1) entspricht, wobei eine geneigte Schulter (22b) zwischen dem ersten zylindrischen Abschnitt (22a) und der Fläche (17a) des röhrenförmigen Hohlraums (17) gebildet ist;
c) Befestigen des halbfertigen Rohrs aus Schritt a) an der Matrix (11), um einen Endabschnitt (2a, 2b) des halbfertigen Rohrs auszubilden, wobei ein Volumen an Kunststoffmaterial gleich oder bis zu 25% in Bezug auf das feste Volumen des Verbindungsabschnitts (3) des herzustellenden Anschlussrohrs (1) aus der Matrix (11) hervortritt;
d) optional Anordnen eines Verstärkungsrings (8) aus einem Kunststoffmaterial oder Metall an dem Endabschnitt (2a, 2b) des halbfertigen Rohrs, welches an der Matrix (11) befestigt ist;
e) Erwärmen des Endabschnitts (2a, 2b) des halbfertigen Rohrs bis zu einer Kunststoffmaterialerweichungstemperatur;
f) Verschließen der Stanze (12) an der Matrix (11), um den Verbindungsabschnitt (3) zu bilden;
g) Halten der Stanze (12) an der Matrix (11) für einen Zeitraum, welcher ausreicht, um die Form des Verbindungsabschnitts (3) des Anschlussrohrs (1) zu festigen;
h) Abkühlen der Stanzvorrichtung (10), wobei der Anschlussabschnitt (3) des Anschlussrohrs (1) bei einer gekühlten Temperatur gebildet worden ist;
i) Öffnen der Stanzvorrichtung (10) und Extrahieren des Anschlussrohrs (1), welches den Verbindungsabschnitt (3) umfasst;
l) optional Wiederholen der Schritte a) - i) an dem entgegengesetzten Endabschnitt (2a, 2b) des Anschlussrohrs (1).

2. Verfahren nach Anspruch 1, wobei das Kunststoffmaterial aus Polytetrafluorethylen, modifiziertem Polytetrafluorethylen, Perfluoralkoxy, Polyethylen, Polypropylen, Polyoxymethylen, Nylon und Polyetheretherketon, vorzugsweise modifiziertem Polytetrafluorethylen, ausgewählt ist und wobei das halbfertige Rohr eine Wanddicke vorzugsweise zwischen 1,5 mm und 4 mm aufweist.

3. Verfahren nach Anspruch 1 oder 2, wobei Schritt g) und/oder Schritt h) für eine Zeitdauer von ungefähr 5 Minuten durchgeführt werden und wobei die gekühlte Temperatur vorzugsweise ungefähr 4°C beträgt.

4. Stanzvorrichtung (10), welche spezifisch für das Verfahren nach Anspruch 1 bis 3 angepasst ist, wobei die Stanzvorrichtung (10) eine Stanze (12) und eine Matrix (11) umfasst, wobei die Stanze (12) und die Matrix (11), wenn sie sich in einem Schließzustand befinden, die Form des Verbindungsabschnitts (3) des herzustellenden Anschlussrohrs (1) im Negativ reproduzieren, wobei:
- die Stanze (12) einen Zentrierungsabschnitt (12a) und einen Stanzabschnitt (12b) umfasst, wobei sich sowohl der Zentrierungsabschnitt (12a) als auch der Stanzabschnitt (12b) entlang einer Achse (Y) erstrecken und wobei der Zentrierungsabschnitt (12a) in Bezug auf den Stanzabschnitt (12b) radial hervorsteht, um eine Schulter (12c) zu bilden, wobei der Stanzabschnitt (12b) ein kegelstumpfförmiges Element (14) und ein Stanzprofil (15) umfasst, wobei das kegelstumpfförmige Element (14) ein distales Ende (14a) sowie ein proximales Ende (14b) umfasst und einen Hauptdurchmesser (d) aufweist, welcher im Wesentlichen entsprechend zu dem oder geringfügig kleiner als der Innendurchmesser des Anschlussrohrs (1) ist, und wobei das distale Ende (14a) vorzugsweise abgeschrägt ist, wobei das Stanzprofil (15) in einer in Umfangsrichtung zu dem proximalen Ende (14b) des kegelstumpfförmigen Elements (14) benachbarten Position an der Schulter (12c) angeordnet ist, wobei das Stanzprofil (15) eine Prägung umfasst, welche eine ringförmige Aussparung (15a) umfasst, welche mittels einer ringförmigen Nut (15b) mit dem proximalen Ende (14b) des kegelstumpfförmigen Elements (14) verbunden ist,
- die Matrix (11) einen röhrenförmigen Hohlraum (17) umfasst, welcher sich entlang einer longitudinalen Achse (Y') erstreckt und eine erste Öffnung (20) aufweist, wobei der röhrenförmige Hohlraum (17) derart eingerichtet ist, dass er mit der Stanze (12) gekoppelt ist, so dass die jeweiligen Achsen (Y, Y') übereinstimmen und eine Form für den Kopplungsabschnitt (3) des Anschlussrohrs (1) ausbilden, wobei die Matrix (11) an der ersten Öffnung (20) des röhrenförmigen Hohlraums (17) einen Stanzsitz (22) umfasst, wobei der röhrenförmige Hohlraum (17) eine Fläche (17a) umfasst, welche eine Mehrzahl kreisförmiger Aussparungen (18) umfasst, welche in einer zusammenhängenden Position angeordnet sind und durch kreisförmige Einsenkungen (19) getrennt sind, um ein sägezahnförmiges Profil auszubilden,
- der Stanzsitz (22) einen ersten zylindrischen Abschnitt (22a) umfasst, welcher einen Durchmesser aufweist, welcher im Wesentlichen dem Außendurchmesser des Verbindungsabschnitts (3) des herzustellenden Anschlussrohrs (1) entspricht, wobei eine geneigte Schulter (22b) zwischen dem ersten zylindrischen Abschnitt (22a) und der Fläche (17a) des röhrenförmigen Hohlraums (17) gebildet ist.

5. Stanzvorrichtung (10) nach Anspruch 4, wobei die Matrix (11) eine erste (11a) und eine zweite Halbmatrix (11b) umfasst, welche mittels Kopplungsmitteln, beispielsweise Stiften (16) oder Scharnieren, gekoppelt werden können.

6. Stanzvorrichtung (1) nach Anspruch 4 oder 5, wobei der röhrenförmige Hohlraum (17) ein durchgehender Hohlraum ist und eine zweite Öffnung (21) aufweist, welche sich entgegengesetzt zu der ersten Öffnung (20) befindet.

7. Stanzvorrichtung (10) nach einem der Ansprüche 4 bis 6, wobei der Stanzsitz (22) ferner einen zweiten (22c) und einen dritten zylindrischen Abschnitt (22d) umfasst, welche in einer in Bezug auf den ersten zylindrischen Abschnitt (22a) äußeren, konzentrischen Beziehung angeordnet sind, wobei der zweite zylindrische Abschnitt (22c) dazu eingerichtet ist, jegliche Kunststoffmaterialgrate aufzunehmen, welche während des Stanzensgebildet worden sind, und wobei der dritte zylindrische Abschnitt (22d) eine Form aufweist, welche zu der Form des Zentrierungsabschnitts (12a) der Stanze (12) oder einem Endteil davon komplementär ist.

8. Anschlussrohr (1), welches für ein "Klemmsystem" eingerichtet ist, **dadurch gekennzeichnet, dass** es vollkommen aus monolithischem Kunststoffmaterial ohne Fügestellen hergestellt ist, wobei es eine Innenfläche von gleichmäßigem Durchmesser aufweist und an wenigstens einem Ende (2a, 2b) einen Verbindungsabschnitt (3) zu einer Rohrleitung (T), einer Vorrichtung und/oder einem Teil einer Vorrichtung einer Fluidverarbeitungseinrichtung oder Anlage umfasst, wobei der Verbindungsabschnitt (3) einen größeren Durchmesser als der Außendurchmesser des Anschlussrohrs (1) aufweist und damit eine Schulter (4) mit einem Profil bildet, welches in Richtung des Endes (2a, 2b) des Anschlussrohrs (1) aufgeweitet ist.

9. Anschlussrohr (1) nach Anspruch 8, wobei der Verbindungsabschnitt (3) eine Endfläche (5) in ringförmiger Form umfasst, welche auf einer zu einer Hauptachse (X) des Anschlussrohrs (1) lotrechten Ebene liegt, wobei die Endfläche (5) eine ringförmige Nut (6) umfasst, welche einen Sitz für einen Dichtungsring konstituiert.

10. Anschlussrohr (1) nach einem der Ansprüche 8 oder 9, wobei die Außenfläche des Anschlussrohrs (1) in einer zu dem Verbindungsabschnitt (3) proximalen Position einen Ast (7) umfasst.

11. Anschlussrohr (1) nach einem der Anspruch 8 bis 10, wobei das Anschlussrohr (1) einen Verstärkungsring (8) umfasst, welcher derart geformt ist, dass er an der Schulter (4) anhaftet.

12. Anschlussrohr (1) nach Anspruch 11, wobei der Verstärkungsring (8) in der Schulterfläche (4) fixiert und eingebettet ist.

13. Anschlussrohr (1) nach einem der Ansprüche 8 bis 12, wobei das Kunststoffmaterial aus Polytetrafluorethylen, modifiziertem Polytetrafluorethylen, Perfluoralkoxy, Polyethylen, Polypropylen, Polyoxymethylen, Nylon und Polyetheretherketon, vorzugsweise modifiziertem Polytetrafluorethylen, ausgewählt ist.

14. Anschlussrohr (1) nach einem der Ansprüche 8 bis 13, wobei die Dicke der Rohrwände (1) weniger als 4 mm beträgt.

## Revendications

1. Procédé de fabrication d'un tuyau de jonction (1) entièrement constitué de matière plastique, le tuyau de jonction étant configuré pour un « système de serrage » et comprenant, à au moins une extrémité (2a, 2b) dudit tuyau de jonction (1), une portion de raccordement (3) à une canalisation (T), un dispositif et/ou une partie d'un dispositif d'un appareil ou d'une installation de traitement de fluide, ledit procédé comprenant les étapes suivantes dans l'ordre :
a) la fourniture d'un tuyau semi-fini en matière plastique ;
b) la fourniture d'un dispositif de poinçonnage (10) comprenant un poinçon (12) et une matrice (11), dans lequel ledit poinçon (12) et ladite matrice (11), dans un état de fermeture, reproduisent en négatif la forme de la portion de raccordement (3) du tuyau de jonction (1) à fabriquer, dans lequel :
- le poinçon (12) comprend une portion de centrage (12a) et une portion de poinçonnage (12b), dans lequel à la fois la portion de centrage (12a) et la portion de poinçonnage (12b) se développent le long d'un axe (Y) et dans lequel la portion de centrage (12a) est radialement saillante par rapport à la portion de poinçonnage (12b), de manière à former un épaulement (12c), la portion de poinçonnage (12b) comprenant un élément tronconique (14) et un profil de poinçonnage (15), dans lequel l'élément tronconique (14) comprend une extrémité distale (14a) et une extrémité proximale (14b) et a un diamètre majeur (d) correspondant sensiblement ou légèrement inférieur au diamètre interne du tuyau de jonction (1), et dans lequel l'extrémité distale (14a) est de préférence biseautée, dans lequel le profil de poinçonnage (15) est agencé sur l'épaulement (12c), dans une position circonférentiellement adjacente à l'extrémité proximale (14b) de l'élément tronconique (14), le profil de poinçonnage (15) comprenant une impression comprenant un relief annulaire (15a) se reliant à l'extrémité proximale (14b) de l'élément tronconique (14) au moyen d'une rainure annulaire (15b),
- la matrice (11) comprend une cavité tubulaire (17) se développant le long d'un axe longitudinal (Y') et comportant une première ouverture (20), la cavité tubulaire (17) étant configurée de manière à se coupler au poinçon (12) en faisant coïncider les axes respectifs (Y, Y') et en constituant un moule pour la portion de couplage (3) du tuyau de jonction (1), dans lequel la matrice (11) comprend, au niveau de la première ouverture (20) de la cavité tubulaire (17), un siège de poinçonnage (22), dans lequel la cavité tubulaire (17) comprend une surface (17a) comprenant une pluralité de reliefs circulaires (18) agencés dans une position contiguë et séparés par des dépressions circulaires (19), de manière à constituer un profil en dents de scie,
- le siège de poinçonnage (22) comprend une première portion cylindrique (22a), ayant un diamètre correspondant sensiblement au diamètre externe de la portion de raccordement (3) du tuyau de jonction (1) à fabriquer, un épaulement incliné (22b) étant formé entre ladite première portion cylindrique (22a) et ladite surface (17a) de la cavité tubulaire (17) ;
c) l'ancrage du tuyau semi-fini de l'étape a) à la matrice (11), en amenant une portion d'extrémité (2a, 2b) du tuyau semi-fini, ayant un volume de matière plastique égal ou jusqu'à 25 % supérieur au volume solide de la portion de raccordement (3) du tuyau de jonction (1) à fabriquer, à émerger de la matrice (11) ;
d) facultativement, l'agencement d'un anneau de renforcement (8), en matière plastique ou en métal, sur la portion d'extrémité (2a, 2b) du tuyau semi-fini ancré à la matrice (11) ;
e) le chauffage de ladite portion d'extrémité (2a, 2b) du tuyau semi-fini jusqu'à une température de ramollissement de matière plastique ;
f) la fermeture dudit poinçon (12) sur ladite matrice (11) de manière à former ladite portion de raccordement (3) ;
g) le maintien du poinçon (12) sur la matrice (11) pendant un temps suffisant pour consolider la forme de ladite portion de raccordement (3) du tuyau de jonction (1) ;
h) le refroidissement du dispositif de poinçonnage (10), dans lequel ladite portion de raccordement (3) du tuyau de jonction (1) a été formée, à une température réfrigérée ;
i) l'ouverture du dispositif de poinçonnage (10) et l'extraction du tuyau de jonction (1) comprenant ladite portion de raccordement (3) ;
1) facultativement, la répétition des étapes a) à i) sur la portion d'extrémité opposée (2a, 2b) du tuyau de jonction (1).

2. Procédé selon la revendication 1, dans lequel la matière plastique est sélectionnée parmi : polytétrafluoroéthylène, polytétrafluoroéthylène modifié, perfluoroalkoxy, polyéthylène, polypropylène, polyoxyméthylène, nylon et polyéther éther cétone, de préférence polytétrafluoroéthylène modifié, et dans lequel le tuyau semi-fini a une épaisseur de paroi de préférence entre 1,5 mm et 4 mm.

3. Procédé selon la revendication 1 ou 2, dans lequel l'étape g) et/ou l'étape h) sont effectuées pendant un temps d'environ 5 minutes, et dans lequel ladite température réfrigérée est de préférence d'environ 4°C.

4. Dispositif de poinçonnage (10) spécifiquement adapté au procédé selon les revendications 1 à 3, dans lequel ledit dispositif de poinçonnage (10) comprend un poinçon (12) et une matrice (11), dans lequel ledit poinçon (12) et ladite matrice (11), dans un état de fermeture, reproduisent en négatif la forme de la portion de raccordement (3) du tuyau de jonction (1) à fabriquer, dans lequel :
- le poinçon (12) comprend une portion de centrage (12a) et une portion de poinçonnage (12b), dans lequel à la fois la portion de centrage (12a) et la portion de poinçonnage (12b) se développent le long d'un axe (Y) et dans lequel la portion de centrage (12a) est radialement saillante par rapport à la portion de poinçonnage (12b), de manière à former un épaulement (12c), la portion de poinçonnage (12b) comprenant un élément tronconique (14) et un profil de poinçonnage (15), dans lequel l'élément tronconique (14) comprend une extrémité distale (14a) et une extrémité proximale (14b) et a un diamètre majeur (d) correspondant sensiblement ou légèrement inférieur au diamètre interne du tuyau de jonction (1), et dans lequel l'extrémité distale (14a) est de préférence biseautée, dans lequel le profil de poinçonnage (15) est agencé sur l'épaulement (12c), dans une position circonférentiellement adjacente à l'extrémité proximale (14b) de l'élément tronconique (14), le profil de poinçonnage (15) comprenant une impression comprenant un relief annulaire (15a) se reliant à l'extrémité proximale (14b) de l'élément tronconique (14) au moyen d'une rainure annulaire (15b),
- la matrice (11) comprend une cavité tubulaire (17) se développant le long d'un axe longitudinal (Y') et comportant une première ouverture (20), la cavité tubulaire (17) étant configurée de manière à se coupler au poinçon (12) en faisant coïncider les axes respectifs (Y, Y') et en constituant un moule pour la portion de couplage (3) du tuyau de jonction (1), dans lequel la matrice (11) comprend, au niveau de la première ouverture (20) de la cavité tubulaire (17), un siège de poinçonnage (22), dans lequel la cavité tubulaire (17) comprend une surface (17a) comprenant une pluralité de reliefs circulaires (18) agencés dans une position contiguë et séparés par des dépressions circulaires (19), de manière à constituer un profil en dents de scie,
- le siège de poinçonnage (22) comprend une première portion cylindrique (22a), ayant un diamètre correspondant sensiblement au diamètre externe de la portion de raccordement (3) du tuyau de jonction (1) à fabriquer, un épaulement incliné (22b) étant formé entre ladite première portion cylindrique (22a) et ladite surface (17a) de la cavité tubulaire (17).

5. Dispositif de poinçonnage (10) selon la revendication 4, dans lequel la matrice (11) comprend une première semi-matrice (11a) et une seconde semi-matrice (11b) qui peuvent être couplées par des moyens de couplage comme des broches (16) ou des charnières.

6. Dispositif de poinçonnage (10) selon la revendication 4 ou 5, dans lequel la cavité tubulaire (17) est une cavité traversante et elle comporte une seconde ouverture (21) à l'opposé de ladite première ouverture (20).

7. Dispositif de poinçonnage (10) selon l'une quelconque des revendications 4 à 6, dans lequel le siège de poinçonnage (22) comprend en outre une deuxième portion cylindrique (22c) et une troisième portion cylindrique (22d), agencées dans une relation concentrique, à l'extérieur de la première portion cylindrique (22a), dans lequel la deuxième portion cylindrique (22c) est configurée de manière à accueillir toute bavure de matière plastique formée au cours du poinçonnage, et dans lequel la troisième portion cylindrique (22d) présente une forme complémentaire de celle de la portion de centrage (12a) du poinçon (12) ou d'une partie terminale de celui-ci.

8. Tuyau de jonction (1) configuré pour un « système de serrage », **caractérisé en ce qu'**il est entièrement constitué de matière plastique monolithique sans raccord, il comporte une surface interne de diamètre régulier et il comprend, à au moins une extrémité (2a, 2b), une portion de raccordement (3) à une canalisation (T), un dispositif et/ou une partie d'un dispositif d'un appareil ou d'une installation de traitement de fluide, dans lequel la portion de raccordement (3) a un diamètre supérieur au diamètre externe du tuyau de jonction (1) et forme avec celui-ci un épaulement (4) avec un profil évasé vers l'extrémité (2a, 2b) du tuyau de jonction (1).

9. Tuyau de jonction (1) selon la revendication 8, dans lequel la portion de raccordement (3) comprend une surface terminale de forme annulaire (5) reposant sur un plan perpendiculaire à un axe principal (X) du tuyau de jonction (1), dans lequel ladite surface terminale (5) comprend une rainure annulaire (6) constituant un siège pour un anneau d'étanchéité.

10. Tuyau de jonction (1) selon la revendication 8 ou 9, dans lequel la surface externe du tuyau de jonction (1), dans une position proximale de la portion de raccordement (3), comprend une molette (7).

11. Tuyau de jonction (1) selon l'une quelconque des revendications 8 à 10, dans lequel le tuyau de jonction (1) comprend un anneau de renforcement (8) façonné de manière à adhérer à l'épaulement (4).

12. Tuyau de jonction (1) selon la revendication 11, dans lequel l'anneau de renforcement (8) est fixé et intégré à la surface d'épaulement (4).

13. Tuyau de jonction (1) selon l'une quelconque des revendications 8 à 12, dans lequel la matière plastique est sélectionnée parmi : polytétrafluoroéthylène, polytétrafluoroéthylène modifié, perfluoroalkoxy, polyéthylène, polypropylène, polyoxyméthylène, nylon et polyéther éther cétone, de préférence polytétrafluoroéthylène modifié.

14. Tuyau de jonction (1) selon l'une quelconque des revendications 8 à 13, dans lequel l'épaisseur des parois de tuyau (1) est inférieure à 4 mm.
